# EUROPÄISCHE PATENTSCHRIFT

(11) **EP 1 264 302 B1**
(45) Veröffentlichungstag und Bekanntmachung des Hinweises auf die Patenterteilung: **11.10.2006**
(21) Anmeldenummer: 01921321.4
(22) Anmeldetag: 08.03.2001
(51) Int. Cl.: G10L 15/26

(54) **VERFAHREN ZUR SPRACHEINGABE EINES ZIELORTES MIT HILFE EINES DEFINIERTEN EINGABEDIALOGS IN EIN ZIELFÜHRUNGSSYSTEM**
METHOD FOR THE SPEECH INPUT OF A DESTINATION INTO A DESTINATION GUIDING SYSTEM BY MEANS OF A DEFINED INPUT DIALOGUE
PROCEDE POUR L'ENTREE VOCALE D'UNE DESTINATION SELON UN DIALOGUE D'ENTREE DEFINI DANS UN SYSTEME DE GUIDAGE

(30) Priorität: 15.03.2000 DE 10012572
(43) Veröffentlichungstag der Anmeldung: 11.12.2002
(73) Patentinhaber: Bayerische Motoren Werke Aktiengesellschaft, 80809 München (DE)
(72) Erfinder: STEINGRÜBNER, Mihai, New Jersey 07302 (US); SAID, Tarek, 82205 Gilching (DE)
(86) Internationale Anmeldenummer: PCT/EP2001/002606
(87) Internationale Veröffentlichungsnummer: WO 2001/069592

(56) Entgegenhaltungen:
- EP-A- 0 905 662
- WO-A-99/48088
- DE-C- 19 709 518
- US-A- 4 866 778

## Beschreibung

Die Erfindung bezieht sich auf eine Vorrichtung und ein Verfahren zur Spracheingabe eines Zielortes mit Hilfe eines definierten Eingabedialogs in ein Zielführungssystem nach dem Oberbegriff des Patentanspruchs 1.

Eine derartige Vorrichtung und ein derartiges Verfahren ist beispielsweise aus der DE 197 09 518 C1 bekannt. Bei diesem bekannten Verfahren werden dem Benutzer mehrere durch Sprachkommandos auswählbare Bedienfunktionen angeboten. Zu jeder auswählbaren Bedienfunktion wird ein Lexikon aus einer Gesamdatenbank generiert, wodurch eine schnellere und bedienerfreundlichere sprachgesteuerte Suche nach Zieladressen ermöglicht werden soll. Die DE 197 09 518 C1 geht dabei von bekannten Systemen aus, die ein Buchstabieren der Zielorte erfordern. Doch auch bei einem Zielführungssystem nach der DE 197 09 518 C1 liegt keine benutzerfreundliche Eingabemöglichkeit vor, da vor einer Zielorteingabe erst ein Sprachkommando für die Auswahl einer gewünschten Bedienfunktion erforderlich ist. Der Benutzer muß vor einer Zielorteingabe die Art der Zielorteingabe auswählen, z. B. ob der Zielort buchstabiert werden soll, ob der Zielort über eine Grobzieleingabe oder ob er über eine Eingabe des Zielortnamens gesucht werden soll. Die Eingabe des Zielortnamens beispielsweise erfordert die Suche in einem Lexikon mit allen Zielortnamen. In Deutschland würde ein derartiges Lexikon einen Umfang von ca. 60000 Orten umfassen. Diese Fülle an gespeicherten Sprachäußerungen ist mit den bekannten Spracherkennungssystemen (meist sog. HMM-Systeme), deren Grenze für eine gute Spracherkennungsrate erfahrungsgemäß bei ca. 1000 Worten liegt, nicht mehr befriedigend zu bewältigen.

Aus der EP-A-0 905 662 ist ein Eingabesystem wenigstens für Orts- und/oder Straßennamen mit einer Eingabeanordnung bekannt. Dieses weist wenigstens eine Orts- und/oder Straßenliste enthaltende Datenquellenanordnung und eine Steueranordnung auf, die zur Suche von über die Eingabeanordnung eingegebenen Orts- oder Straßennamen in einer Orts- oder Straßenliste der Datenquellenanordnung vorgesehen ist. Zur Vereinfachung der Eingabe von Orts- und/oder Straßennamen enthält die Datenquellenanordnung außer einer ersten Orts- und/oder Straßenliste mit alphabetisch sortierten Orts- und/oder Straßennamen wenigstens eine zweite Orts- und/oder Straßenliste mit nach einem Häufigkeitskriterium sortierten Ort- und/oder Straßennamen. Von einem Spracheingabesystem der Eingabeanordnung werden Spracheingaben an die Steueranordnung weitergeleitet. Die Steueranordnung ist dann zur sequentiellen Suche eines sprachlich eingegebenen Orts- oder Straßennamens vom Anfang der zweiten Orts- oder Straßenliste vorgesehen.

Es ist Aufgabe der Erfindung, ein Verfahren eingangs genannter Art im Hinblick auf eine leichtere Bedienbarkeit und im Hinblick auf die oben genannte Grenze der Spracherkennungssysteme zu verbessern.

Diese Aufgabe wird durch die Merkmale des Patentanspruchs 1 gelöst. Vorteilhafte Ausgestaltungen der Erfindung sind die Gegenstände der abhängigen Patentansprüche.

Erfindungsgemäß sind die einem Zielort zugeordneten gespeicherten Sprachäußerungen zumindest aus dem Zielortnamen und mindestens einer den Zielortnamen eindeutig identifizierenden, regional einschränkenden Zusatzinformation zusammengesetzt. Jeder Zielortname ist in einer ersten Datenbasis und jede in Frage kommende Zusatzinformation (ohne Zielortname) ist in einer zweiten Datenbasis abgelegt. Jedes Zielortname-Datum bzw. jeder Eintrag zu einem Zielortnamen in der ersten Datenbasis umfaßt ein Hinweissymbol. Ein derartiges Hinweissymbol kann beispielsweise eine programmtechnische Marke zum schnellen Auffinden des Datums sein. Vorzugsweise kennzeichnet die Marke bzw. das Hinweissymbol die dem jeweiligen Datum zugeordnete Zusatzinformation selbst.

Dabei ist die zweite Datenbasis naturgemäß viel kleiner als die erste. Als regional einschränkende Zusatzinformationen kommen beispielsweise Bundesländer, Bezirke, regionale Bezeichnungen, Landkreise, Flüsse, Seen und/oder markante größere Städte in Frage. Vorzugsweise sind die Zusatzinformationen eindeutig unterscheidbar, d. h. gleichlautende Zusatzinformationen liegen in der zweiten Datenbasis nicht vor. Diese Zusatzinformationen sollen sogenannte Identifikatoren sein, durch die auch das Problem der Mehrdeutigkeit gleichlautender Zielortnamen (z. B. Münster bei Straubing, Münster in Unterfranken) gelöst wird. Die Identifikatoren werden vorzugsweise derart gewählt, daß ihre Anzahl die oben genannte Grenze für gute Spracherkennung nicht überschreitet.

Diese erfindungsgemäße Datenbankstruktur wird vorzugsweise derart benutzt, daß nach einer eingegebenen Sprachäußerung diese in jedem Fall erst mit den in der kleineren zweiten Datenbasis abgelegten Identifikatoren verglichen wird. Nur wenn ein Identifikator in der zweiten Datenbasis erkannt wird, wird die Spracherkennung des Zielortnamens fortgesetzt. Dabei wird nicht die gesamte erste Datenbasis im Hinblick auf die eingegebene Sprachäußerung nach dem Zielortnamen durchsucht, sondern lediglich ein dem erkannten Identifikator zugeordneter aus der ersten Datenbasis generierter Teildatenbestand.

In einer dritten Datenbasis können Präpositionen abgelegt sein, die zur Separierung von Zielortname und Zusatzinformation in einer eingegebenen Sprachäußerung dienen.

Bestenfalls nimmt der Benutzer als Sprachäußerung eine Phraseneingabe vor, die aus Zielortname, Präposition und Zusatzinformation besteht. Erfindungswesentlich ist aber, daß der Eingabedialog zu Beginn sowohl eine Einzelworteingabe als auch eine Phraseneingabe, z. B. in der Form Zielortname, Präposition und Identifikator oder in der Form Zielortname und Identifikator, als Spracheingabe zuläßt. Nach der Eingabe einer Sprachäußerung wird von der Spracherkennungseinrichtung geprüft, ob zumindest ein Teil der Sprachäußerung eine Zusatzinformation ist. Die Spracherkennungseinrichtung führt den Benutzer bei Bedarf, d. h. insbesondere wenn kein Teil der Sprachäußerung als Zusatzinformation erkannt wird, im weiteren Verlauf auf die Spracheingabe einer Zusatzinformation oder auf eine definierte Phraseneingabe hin, durch die für die Spracherkennungseinrichtung erkennbar wird, daß zumindest ein Teil der Sprachäußerung eine Zusatzinformation ist.

Der Benutzer ist flexibel in der Darbietung seiner Sprachäußerung und muß keine manuelle Bedienfunktionsauswahl (wie z. B. "Grobzieleingabe") treffen. Außerdem kommt ein Lerneffekt zum Tragen: Der Benutzer wird dem System nach mehrmaliger Anwendung von selbst die optimale Phraseneingabe in der Form Zielortname, Präposition und Zusatzinformation darbieten.

Vorzugsweise wird die eingegebene Sprachäußerung von der Spracherkennungseinrichtung einer von mindestens zwei Eingabekategorien zugeordnet. Dabei wird eine erste Eingabekategorie als Phraseneingabe definiert, wenn die Spracherkennungseinrichtung einen Teil der Sprachäußerung für eine Zusatzinformation hält. Eine zweite Eingabekategorie wird als Einzelworteingabe definiert, wenn die Spracherkennungseinrichtung keinen Teil der Sprachäußerung für eine Zusatzinformation hält.

Wenn ein Teil der Sprachäußerung als Zusatzinformation erkannt wird, wird zur Spracherkennung des Zielortnamens nicht die gesamte erste Datenbasis im Hinblick auf die eingegebene Sprachäußerung nach dem Zielortnamen durchsucht. Vielmehr wird mit Hilfe der Hinweissymbole aus der ersten Datenbasis ein dem erkannten Identifikator zugeordneter Teildatenbestand generiert. Der Teildatenbestand kann aufgrund einer dem Identifikator zugeordneten Umgebungsliste generiert werden. Eine derartige Umgebungsliste beinhaltet alle Zielortnamen bzw. Hinweissymbole der Zielortnamen, die für den jeweiligen Identifikator in Frage kommen. Die Umgebungslisten können innerhalb oder außerhalb der zweiten Datenbasis hinterlegt sein. Alternativ kann ohne Vorhandensein derartiger Umgebungslisten die erste Datenbasis auf die den jeweils erkannten Identifikator kennzeichnenden Hinweissymbole durchsucht werden. Der Teildatenbestand enthält schließlich zumindest die für die Spracherkennung erforderlichen Daten der Zielortnamen, die im Hinblick auf den Identifikator in Frage kommen. Derartige Zielortnamen-Daten umfassen insbesondere auch Referenzmodelle oder Grundlagen zur Erstellung von Referenzmodellen für die Spracherkennung nach bereits aus dem Stand der Technik bekannten Verfahren. Die eingegebene Sprachäußerung muß demnach zum Auffinden des gewünschten Zielortnamens lediglich mit dem jeweiligen dynamisch generierten Teildatenbestand verglichen werden.

Wurde kein Zielortname erkannt, kann entweder ein Eingabedialog mit der nochmaligen Abfrage des Zielortnamens oder der Zusatzinformation folgen oder eine Liste zur Auswahl eines Zielortnamens angeboten werden (z. B. durch Vorlesen und sprachgesteuertem Bestätigen, durch Anzeigen am Bildschirm mit manueller Auswahlmöglichkeit, oder durch Anzeigen am Bildschirm und sprachgesteuerter Auswahl).

Wenn kein Teil der Sprachäußerung für eine Zusatzinformation gehalten wird, wird die gesamte Sprachäußerung in der zweiten Datenbasis gesucht. Ziel dieses Vorgehens ist eine schnelle Suche nach einem Zielortnamen, der auch eine gleichlautende Zusatzinformation sein kann. Vorzugsweise werden nur die Zusatzinformationen in der zweiten Datenbasis mit der eingegebenen Sprachäußerung verglichen, die auch Zielortnamen sein können.

Im Falle eines Nichterkennens einer Zusatzinformation in der zweiten Datenbasis wird der Benutzer im Rahmen des weiteren Eingabedialogs zur Spracheingabe einer Zusatzinformation aufgefordert. Dabei kann entweder eine Zusatzinformation allein oder eine Phraseneingabe (mit Zusatzinformation) gefordert werden. Die zuvor eingegebene Sprachäußerung wird vorzugsweise als Zielortname interpretiert und für die spätere Spracherkennung des Zielortnamens abgespeichert.

Eine eingegebene Sprachäußerung wird als Phraseneingabe kategorisiert, wenn ein Teil der Sprachäußerung als Präposition oder als Identifikator, dem ein Teil der Sprachäußerung voransteht, erkannt wird.

Das Erfindungswesentliche ist, daß unabhängig von der Form der Spracheingabe niemals eine erste Suche in der ersten Datenbasis, sondern nur in der zweiten Datenbasis, stattfindet. Die erste Datenbasis dient als Grundlage für die dynamische Generierung eines Teildatenbestandes in Abhängigkeit von der in der zweiten Datenbasis erkannten Zusatzinformation. Zur Spracherkennung eines Zielortnamens selbst wird niemals die gesamte erste Datenbasis, sondern nur der aus der ersten Datenbasis entnommene Teildatenbestand verwendet. Gilt keine Zusatzinformation als erkannt, führt der Eingabedialog des Spracherkennungssystems den Benutzer zumindest zu einer Eingabe des Identifikators oder zur Eingabe einer Phrase, die definitionsgemäß einen Identifikator enthält, hin.

In der Zeichnung ist ein Ausführungsbeispiels der Erfindung dargestellt. Es zeigt
- Fig. 1: eine erfindungsgemäße Vorrichtung in Form einer entsprechenden Datenbankstruktur
- Fig. 2a-2h: ein erfindungsgemäßes Verfahren in Form eines möglichen Eingabedialog-Ablaufplans

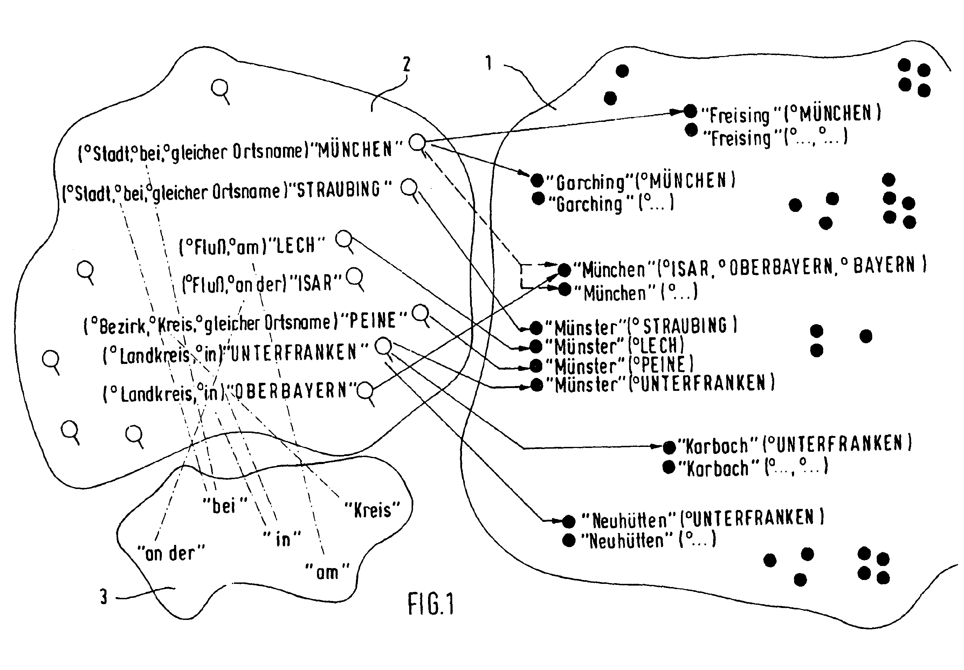

In Fig. 1 sind drei Datenbasen 1, 2 und 3 dargestellt. Die erste Datenbasis 1 enthält beispielsweise alle möglichen Zielortnamen Deutschlands in Form von Zielortnamen-Daten. Ein Zielortnamen-Datum umfaßt beispielsweise eine identifikatorbezogene Marke und ein Referenzmodell zur Spracherkennung. Die zweite Datenbasis 2 enthält alle möglichen Identifikatoren, wobei hinter jedem Identifikator zumindest eine Liste der zugehörigen Zielortnamen in Form ihrer identifikatorbezogenen Marken steht. Diese Liste wird im Folgenden "Umgebungsliste" genannt. In der dritten Datenbasis 3 sind alle im Zusammenhang mit Phraseneingaben möglichen Präpositionen abgespeichert. Für Deutschland umfaßt die Datenbasis 1 ca. 60000 Zielortnamen, die Datenbasis 2 ca. 500 Indentifikatoren und die Datenbasis 3 ca. 70 Präpositionen. Dieses Beispiel wird lediglich genannt, um die Größenordnungsverhältnisse der Datenbankstruktur bestehend aus den drei Datenbasen 1 bis 3 darzulegen.

Eine optimale erfindungsgemäße Phraseneingabe setzt sich aus einem Zielortnamen, einer auf den Zielortnamen folgenden Präposition und einem auf die Präposition folgenden Identifikator zusammen. Es gibt keine gleichlautenden Identifikatoren. Allerdings können gleichlautende Identifikatoren und Zielortnamen vorliegen (z. B. "München"). Gleichlautende Zielortnamen besitzen unterschiedliche Identifikatoren, um die Mehrdeutigkeit von Zielortnamen auszuschließen.

Mögliche Phraseneingaben zu den Beispielen nach Fig. 1:
"Garching bei München"
"Freising bei München"
"München in Oberbayern" oder
   "München an der Isar" oder
   "München in Bayern"
"Münster bei Straubing"
   "Münster am Lech"
   "Münster Kreis Peine"
   "Münster in Unterfranken"
"Neuhütten in Unterfranken"
"Karbach in Unterfranken"

Die Datenbasis 3 enthält beispielsweise die möglichen Präpositionen "in", "bei", "an der", "am", "Kreis". Die Datenbasis 2 enthält beispielsweise als Identifikatoren (größere) Städte (z. B. "München", "Straubing"), Flüsse (z. B. "Lech", "Isar"), Bezirke (z. B. "Peine"), regionale Bezeichnungen und Landkreise (z. B. "Unterfranken", "Oberbayern"). Zu jedem Identifikator können zusätzliche Merkmalsinformationen, wie z. B. die ldentifikatorkategorie "Stadt", "Fluß", "Bezirk" bzw. "Landkreis" und der Hinweis auf einen gleichlautenden Zielortnamen in der Datenbasis 1, abgespeichert sein.

Bei den hier genannten Beispielen wird davon ausgegangen, daß die Sprachäußerung richtig verstanden wird, anderenfalls wären Nachfragedialoge erforderlich.

Im Falle einer Phraseneingabe (z. B. "Münster in Unterfranken") wird der Identifikator "Unterfranken" in der Datenbasis 2 gesucht und der Identifikator mit der größten Erkennungswahrscheinlichkeit ausgewählt. Anschließend wird aufgrund der "Umgebungsliste" (Hier: "Münster", "Karbach" und "Neuhütten" bzw. Liste der diesen Zielortnamen zugeordneten programmtechnischen Marken), die hinter dem Identifikator Unterfranken" steht, dynamisch mittels der Marken aus der ersten Datenbasis 1 ein Teildatenbestand bestehend zumindest aus den für die Spracherkennung erforderlichen Zielortsnamen-Daten erstellt. Aus diesem regional eingeschränkten Teildatenbestand wird der eingegebene Zielortname gesucht. Auch hier gilt der Zielortname ("Münster") mit der größten Erkennungswahrscheinlichkeit als erkannt. Diese Suchstrategie mit der erfindungsgemäßen Datenbankstruktur ist schneller und erkennungssicherer als ein spracherkennungsbezogenes Durchsuchen der gesamten Datenbasis 1 nach dem Zielortnamen und ein anschließend erforderlicher Nachfragedialog bei Mehrdeutigkeit wie beim Stand der Technik.

Im Falle einer Einzelworteingabe (z. B. "München") wird die gesamte Sprachäußerung zunächst als Identifikator interpretiert und in der zweiten Datenbasis 2 gesucht. Da "München" einerseits einem Identifikator in der Datenbasis 2 und andererseits mindestens einem gleichlautenden Zielortnamen in der Datenbasis 1 entspricht und dies auch als Information dem Identifikator "München" zugeordnet ist, wird eine Liste aller "München" als Zielortnamen erstellt und beispielsweise nach Größe der Orte mit Nennung des jeweiligen Identifikators (z. B. in "Oberbayern") zur Auswahl angeboten. Diese Liste kann ebenfalls, wie die Umgebungsliste, bei den jeweiligen Identifikatoren in der zweiten Datenbasis 2 abgelegt sein.

Entspricht ein Identifikator tatsächlich einem gleichlautenden gewünschten Zielort ist diese Suchstrategie die schnellstmögliche. Somit ist zumindest für diesen Fall die Bedienerfreundlichkeit optimiert. Weder ein Nachfragedialog noch eine Bedienfunktionauswahl durch ein vorhergehendes Sprachkommando wie beim Stand der Technik sind erforderlich.

Existiert der gewünschte Zielortname in der Datenbasis 2 als Identifikator nicht, wird der Eingabedialog derart ausgestaltet, daß der Benutzer zu einer Phraseneingabe oder zumindest zur Eingabe eines Identifikators hingeführt wird.

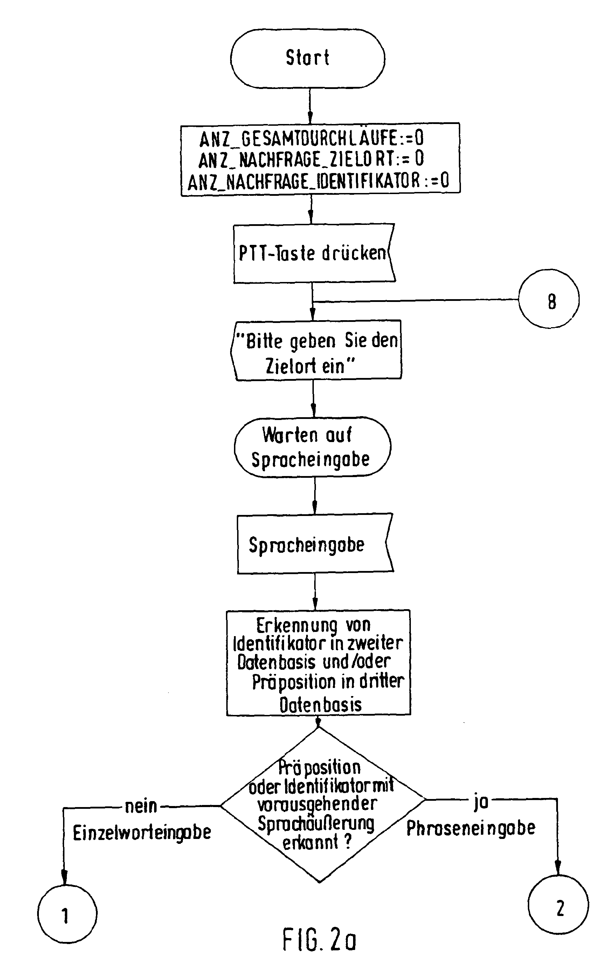

In den Figuren 2a bis 2h ist ein möglicher Gesamt-Eingabedialog mit Ablaufplan des erfindungsgemäßen Verfahrens dargestellt, zum Teil auch für den Fall, in dem die Spracherkennungseinrichtung eine Sprachäußerung möglicherweise falsch versteht.

In Fig. 2a startet der Ablaufplan für eine sprachgesteuerte Zielorteingabe z.B. durch ein Sprachkommando oder durch einen manuellen Tastendruck. Die darauf folgende Definition der Variablen ANZ_GESAMTDURCHLÄUFE, ANZ_NACHFRAGE_ZIELORT und ANZ_NACHFRAGE_IDENTIFIKATOR dient, wie unten genauer erläutert, zum Begrenzen der Anzahl von Fehlversuchen.

Der Eingabedialog beginnt beispielsweise mit der Aufforderung "Bitte geben Sie den Zielort ein". Bestenfalls wird hiernach der Zielort in Form einer Phrase, bestehend aus den Teilen Zielortname, Präposition und Identifikator, eingegeben.

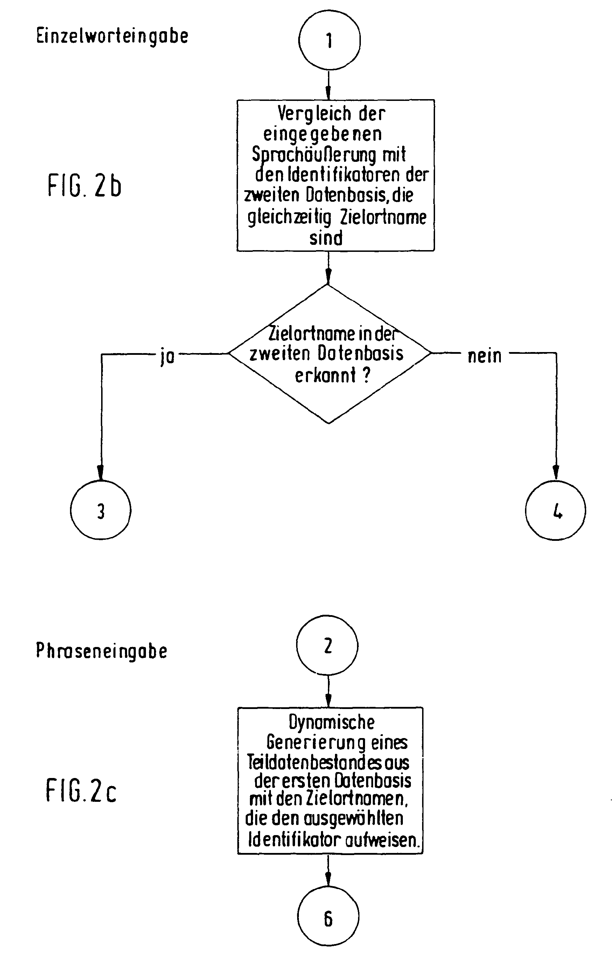

Im Folgenden wird der weitere Ablauf zunächst am Beispiel der eingegebenen Sprachäußerung "München" erläutert. Nach der Spracheingabe wird entsprechend Fig. 2a vom Spracherkennungssystem zunächst versucht, einen Zielortnamen, eine Präposition und einen Identifikator zu separieren, wobei der Identifikator in der zweiten Datenbasis 2 und die Präposition in der dritten Datenbasis 3 gesucht wird. Gilt ein Identifikator mit voranstehender Sprachäußerung oder eine Präposition als erkannt, wird die eingegebene Sprachäußerung als Phraseneingabe (vgl. Verbinder 2) kategorisiert. Wird kein Identifikator, dem ein Teil der Sprachäußerung voransteht, oder keine Präposition erkannt, wird die eingegebene Sprachäußerung als Einzelworteingabe kategorisiert. Im Falle der Spracheingabe "München" liegt also eine Einzelworteingabe vor. Im nächsten Schritt (vgl. Verbinder 1) wird die eingegebene Sprachäußerung "München" mit den in der zweiten Datenbasis 2 abgelegten Identifikatoren, die zugleich auch Zielortname sind, entsprechend Fig. 2b verglichen (vgl. Verbinder 1). Im Beispiel nach Fig. 1 wird bei der Spracheingabe "München" ein Identifikator erkannt.

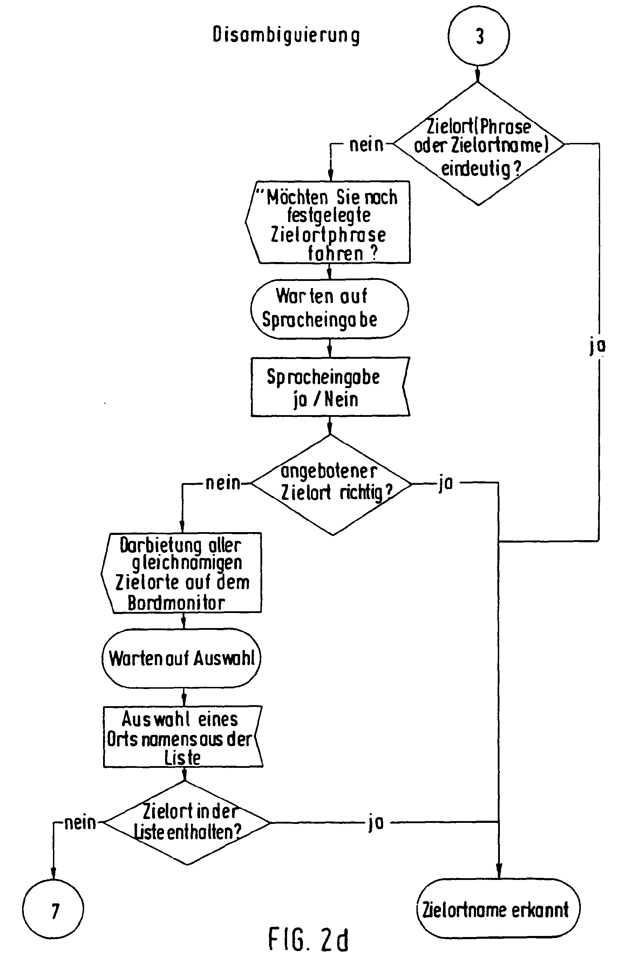

Daraufhin wird der erkannte Identifikator entsprechend Fig. 2d (vgl. Verbinder 3), hier "München", auf Mehrdeutigkeit überprüft, d.h. ob der Zielortname "München" mehrmals in Deutschland vorkommt. Diese Information ist dem erkannten Identifikator mit Verweis auf die entsprechenden Zielortnamen hinterlegt. Bei eindeutigen Zielortnamen ist der Zielort bereits richtig erkannt. Im vorliegenden Fall sind zumindest zwei Zielortnamen "München" vorhanden. Beispielsweise gibt das Spracherkennungssystem im Folgenden zunächst den größten Zielort in Form einer Zielortphrase aus: "Möchten Sie nach München in Oberbayern fahren?" Wird dieser Zielort als der richtige bestätigt, ist die Zielorteingabe erfolgreich beendet. Wird dagegen der dargebotene Zielort abgelehnt, werden beispielsweise alle gleichnamigen Zielorte, hier "München", mit Nennung der geographischen Lage ("München in Oberbayern", "München bei Hamburg",...) auf dem Bordmonitor zur Auswahl des gewünschten Zielortnamens aus der Liste angeboten.

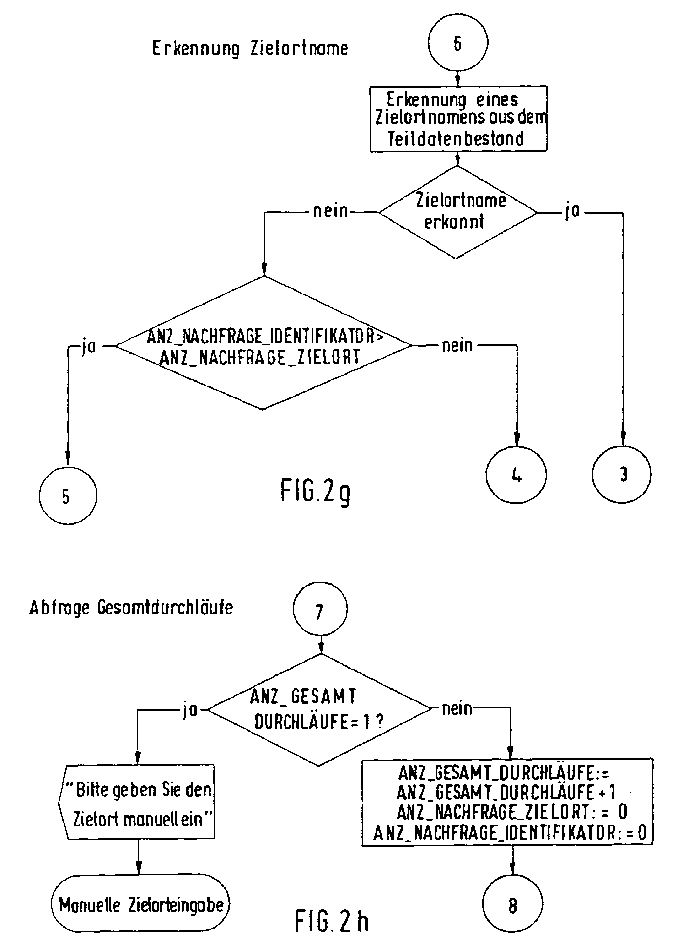

Ist der gewünschte Zielort in der Liste nicht enthalten, wird gemäß Figur 2h (vgl. Verbinder 7) mittels des Zählers ANZ_GESAMTDURCHLÄUFE überprüft, wie viele Fehlversuche bereits sprachgesteuert vorgenommen wurden. Bei Erreichen einer vorgegebenen Schwelle, hier ANZ_GESAMTDURCHLÄUFE = 2, wird eine manuelle Zielorteingabe vorgeschlagen. Ist diese vorgegebene Schwelle noch nicht erreicht, wird zu Beginn des Eingabedialoges (vgl. Verbinder 8) zurückgekehrt.

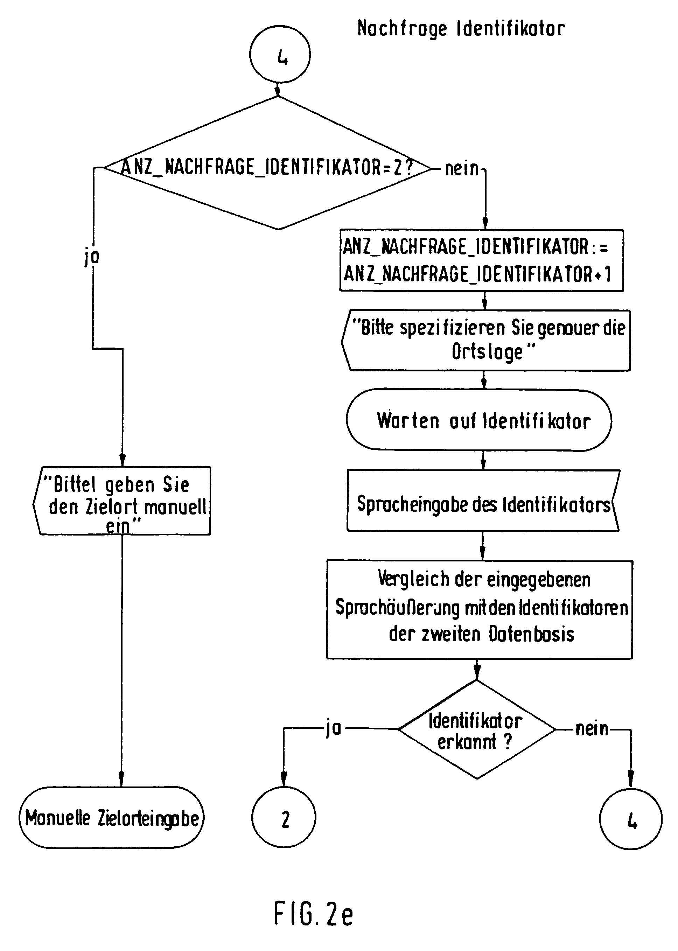

Im Folgenden wird der Ablaufplan am Beispiel der Spracheingabe "Münster" in Fig. 2a weiter erläutert. Wieder wird die Spracheingabe als Einzelworteingabe kategorisiert. Hier gilt jedoch entsprechend Fig. 2b kein Identifikator, der zugleich Zielortname ist, in der Datenbasis 2 als erkannt. In diesem Fall wird gemäß Fig. 2e (vgl. Verbinder 4) zunächst mittels des Zählers ANZ_NACHFRAGE_IDENTIFIKATOR die Häufigkeit der Fehlversuche wieder überprüft. Ist eine vorgegebene Schwelle, hier ebenfalls ANZ_NACHFRAGE_IDENTIFIKATOR = 2, noch nicht erreicht, wird ein Nachfragedialog gestartet. Beispielsweise wird der Benutzer aufgefordert, eine genauere Ortslage zu spezifizieren. Es wird auf eine Spracheingabe gewartet, die bestenfalls ein Identifikator ist. Am Beispiel des Zielortnamens "Münster" folgt an diesem Punkt des Ablaufplans z.B. die Spracheingabe "Unterfranken" oder "in Unterfranken". Im Falle der Spracheingabe "in Unterfranken" wird Unterfranken als Identifikator erkannt, da dieser Teil der Sprachäußerung nach der Präposition "in" folgt. Im Falle der Spracheingabe "Unterfranken" wird die gesamte Sprachäußerung als Identifikator gewertet.

Gemäß Fig. 2e wird die Sprachäußerung mit allen in der Datenbasis 2 abgelegten Identifikatoren verglichen. Im Falle der vorhergehenden Spracheingabe "in Unterfranken" wird der Identifikator von der Präposition separiert, und mit allen in der Datenbasis 2 abgelegten Identifikatoren verglichen.

Wird kein Identifikator aus der Datenbasis 2 erkannt, wird gemäß Figur 2e (über Verbinder 4 zu Fig. 2e), wie bereits beschrieben, der Identifikator nochmals nachgefragt. Wird ein Identifikator erkannt und ausgewählt (vgl. Verbinder 2, Fig. 2c), wird dynamisch, d.h. in Echtzeit, ein spracherkennungsbezogener Teildatenbestand aufgrund der "Umgebungstiste" des Identifikators aus der ersten Datenbasis 1 generiert. Im vorliegenden Beispiel werden alle Zielortnamen-Daten, die dem Identifikator "Unterfranken" zugeordnet sind, ausgewählt: "Neuhütten", "Karbach" und "Münster". Die Spracheingabe des gewünschten Zielortnamens, hier "Münster", kann nach der Spracheingabe gemäß Fig. 2a des Ablaufplans bis dahin in einem flüchtigen Speicher des Spracherkennungssystem abgespeichert werden.

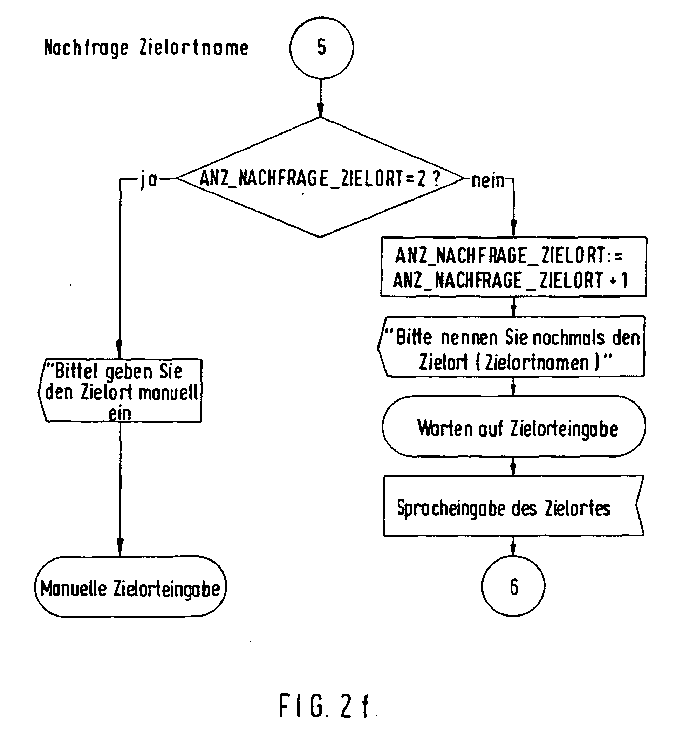

Im Folgenden wird gemäß Fig. 2g (vgl. Verbinder 6) im generierten Teildatenbestand überprüft, ob die als Zielortname interpretierte Spracheingabe einem Zielort aus dem Teildatenbestand entspricht. Wird der Zielortname erkannt, wird gemäß Figur 2d (vgl. Verbinder 3), wie bereits beschrieben, weiter vorgegangen. Gilt jedoch kein Zielortname als erkannt, z.B. wenn die Spracheingabe "Münster" falsch oder zu undeutlich ausgesprochen wurde, wird nochmals entweder der Identifikator gemäß Fig. 2e (über Verbinder 4) oder der Zielortname gemäß Fig. 2f (über Verbinder 5) nachgefragt. Hier wird zunächst die Anzahl der Nachfrageversuche von Identifikator und Zielortname miteinander verglichen und sich für die weniger nachgefragte Information entschieden. Maximal werden jedoch nur zwei Nachfrageversuche sowohl für den Identifikator als auch für den Zielortnamen pro Gesamtdurchlauf zugelassen. Anschließend wird gemäß Figur 2g (vgl. Verbinder 6), wie bereits beschrieben, weiter vorgegangen.

Schließlich wird im Folgenden der Ablaufplan anhand einer optimalen Phraseneingabe in Fig. 2a erläutert. Beispielsweise wird nach der Aufforderung zur Eingabe eines Zielortes die Spracheingabe "Münster in Unterfranken" vorgenommen. Es wird bei diesem Beispiel von einer ausreichenden Deutlichkeit der Spracheingabe ausgegangen. Hiernach ist eine Separierung von Zielortname, Präposition und Identifikator möglich. Da sowohl eine Präposition als auch ein Identifikator vorhanden ist und als solche erkannt werden, wird die Spracheingabe als Phraseneingabe kategorisiert. Daraufhin wird gemäß Figur 2c (über Verbinder 2), wie bereits beschrieben, vorgegangen.

## Patentansprüche

1. Verfahren zur Spracheingabe eines Zielortes mit Hilfe eines definierten Eingabedialogs in ein Zielführungssystem im Echtzeitbetrieb mit Mitteln, durch die eine eingegebene Sprachäußerung eines Benutzers mittels einer Spracherkennungseinrichtung erfaßt, mit gespeicherten Sprachäußerungen verglichen sowie gemäß ihrer Erkennungswahrscheinlichkeit klassifiziert wird und durch die die gespeicherte Sprachäußerung mit der größten Erkennungswahrscheinlichkeit als die eingegebene Sprachäußerung erkannt wird, wobei die einem Zielort zugeordneten gespeicherten Sprachäußerungen zumindest aus dem Zielortnamen und mindestens einer den Zielortnamen eindeutig identifizierenden, regional einschränkenden Zusatzinformation zusammengesetzt sind, wobei jeder Zielortname mit einem Hinweissymbol in einer ersten Datenbasis (1) und jede Zusatzinformation in einer zweiten Datenbasis (2) abgelegt ist, und wobei wenn ein Teil der Sprachäußerung als Zusatzinformation in der zweiten Datenbasis (2) erkannt wird, ein dieser Zusatzinformation zugeordneter Teildatenbestand aus der ersten Datenbasis (1) generiert wird, in dem der gewünschte Zielortname aufgrund der eingegebenen Sprachäußerung gesucht wird.

2. Verfahren nach Patentanspruch 1, **dadurch gekennzeichnet, daß** in einer dritten Datenbasis (3) Präpositionen abgelegt werden, die zur Separierung von Zielortname und Zusatzinformation in einer eingegebenen Sprachäußerung dienen.

3. Verfahren nach Patentanspruch 1 oder 2, **dadurch gekennzeichnet, daß** nach der Eingabe einer Sprachäußerung von der Spracherkennungseinrichtung geprüft wird, ob zumindest ein Teil der Sprachäußerung eine Zusatzinformation ist, und den Benutzer bei Bedarf im weiteren Verlauf auf die Spracheingabe einer Zusatzinformation oder auf eine definierte Phraseneingabe hinführt, durch die für die Spracherkennungseinrichtung erkennbar wird, daß zumindest ein Teil der Sprachäußerung eine Zusatzinformation ist.

4. Verfahren nach Patentanspruch 3, **dadurch gekennzeichnet, daß** nach der der Eingabe einer Sprachäußerung diese von der Spracherkennungseinrichtung einer von mindestens zwei Eingabekategorien zugeordnet wird, wobei eine erste Eingabekategorie als Phraseneingabe, wenn die Spracherkennungseinrichtung einen Teil der Sprachäußerung für eine Zusatzinformation hält, und eine zweite Eingabekategorie als Einzelworteingabe, wenn die Spracherkennungseinrichtung keinen Teil der Sprachäußerung für eine Zusatzinformation hält, definiert werden.

5. Verfahren nach Patentanspruch 4, **dadurch gekennzeichnet, daß** wenn kein Teil der Sprachäußerung für eine eingegebene Zusatzinformation gehalten wird, die gesamte Sprachäußerung in der zweiten Datenbasis (2) gesucht wird, und daß die gespeicherte Zusatzinformation mit der größten Erkennungswahrscheinlichkeit aus der zweiten Datenbasis (2) als eingegebener Zielortname ausgewählt wird.

6. Verfahren nach Patentanspruch 5, **dadurch gekennzeichnet, daß** im Falle eines Nichterkennens einer Zusatzinformation in der zweiten Datenbasis (2) der Benutzer im Rahmen des weiteren Eingabedialogs zur Spracheingabe einer Zusatzinformation aufgefordert wird.

7. Verfahren nach einem der Patentansprüche 3 bis 6, **dadurch gekennzeichnet, daß** die definierte Phraseneingabe zumindest aus einem Zielortnamen, und einer Zusatzinformation besteht.

8. Verfahren nach einem der Patentansprüche 3 bis 7, **dadurch gekennzeichnet, daß** eine eingegebene Sprachäußerung als Phraseneingabe kategoriesiert wird, wenn ein Teil der Sprachäußerung als Präposition oder als Zusatzinformation, der ein Teil der Sprachäußerung voransteht, erkannt wird.

## Claims

1. A method for the voice input of a destination with the aid of a defined input dialogue into a destination guiding system in real-time operation comprising means, by which an entered voice statement of a user is detected by means of a voice recognition device, is compared with stored voice statements and classified according to its recognition probability, and by which the stored voice statement with the greatest recognition probability is recognised as the entered voice statement, wherein the stored voice statements allocated to a destination are composed at least of the destination name and at least one piece of additional regionally restrictive information clearly identifying the destination name, wherein each destination name is stored with an indicator symbol in a first database (1) and each piece of additional information is stored in a second database (2) and wherein when a part of the voice statement is recognised as additional information in the second database (2), a partial data stock allocated to this additional information is generated from the first database (1), in which the desired destination name is searched for on the basis of the entered voice statement.

2. A method according to claim 1, **characterised in that** prepositions are stored in a third database (3) and are used to separate the destination name and additional information in an entered voice statement.

3. A method according to claim 1 or claim 2, **characterised in that** after the input of a voice statement, the voice recognition device checks whether at least a part of the voice statement is additional information and if necessary then guides the user to the voice input of additional information or to a defined phrase input, by means of which the voice recognition device can recognise that at least part of the voice statement is additional information.

4. A method according to claim 3, **characterised in that** after the input of a voice statement, the latter is allocated by the voice recognition device to one of at least two input categories, a first input category being defined as a phrase input when the voice recognition device considers a part of the voice statement to be additional information, and a second input category being defined as a single word input if the voice recognition device considers no part of the voice statement to be additional information.

5. A method according to claim 4, **characterised in that** when no part of the voice statement is considered to be entered additional information, the entire voice statement is searched for in the second database (2), and **in that** the stored additional information with the highest recognition probability is selected from the second database (2) as the entered destination name.

6. A method according to claim 5, **characterised in that** if additional information is not recognised in the second database (2), the user is requested, within the scope of the further input dialogue, to carry out a voice input of additional information.

7. A method according to any one of claims 3 to 6, **characterised in that** the defined phrase input at least consists of a destination name, and a piece of additional information.

8. A method according to any one of claims 3 to 7, **characterised in that** an entered voice statement is categorised as a phrase input when a part of the voice statement is recognised as a preposition or as additional information which is preceded by a part of the voice statement.

## Revendications

1. Procédé permettant de fournir une entrée vocale d'une destination à l'aide d'un dialogue d'entrée défini dans un système de guidage jusqu'à destination dans un fonctionnement en temps réel, comportant des moyens permettant d'enregistrer un énoncé vocal qui est entré à l'aide d'un dispositif de reconnaissance vocale, qui est comparé à des énoncés vocaux mémorisés, qui est classé selon sa vraisemblance de reconnaissance et qui permet de reconnaître l'énoncé vocal mémorisé avec la plus grande vraisemblance de reconnaissance comme l'énoncé vocal entré, les énoncés vocaux étant mémorisés et associés à une destination sont composés au moins du nom de destination et d'au moins une information supplémentaire délimitée régionalement, identifiant de manière univoque le nom de destination, chaque nom de destination étant enregistré avec un symbole d'identification dans une première base de données (1) et chaque information supplémentaire dans une deuxième base de données (2), et
un composant de données partielles associé à cette information supplémentaire étant généré à partir de la première base de données (1) dans laquelle le nom de destination souhaité est recherché en fonction de l'énoncé vocal entré lorsqu'une partie de l'énoncé vocal est reconnue comme information supplémentaire dans la deuxième base de données (2).

2. Procédé selon la revendication 1,
**caractérisé en ce que**
des prépositions sont enregistrées dans une troisième base de données (3) et servent à séparer le nom de destination et l'information supplémentaire dans un énoncé vocal entré.

3. Procédé selon la revendication 1 ou 2,
**caractérisé en ce que**
le dispositif de reconnaissance vocale vérifie si au moins une partie de l'énoncé vocal est une information supplémentaire et, si besoin est dans la poursuite du déroulement, il conduit l'utilisateur à fournir l'entrée vocale d'une information supplémentaire ou une entrée de phrase définie qui permet au dispositif de reconnaissance vocale de reconnaître qu'au moins une partie de l'énoncé vocal est une information supplémentaire.

4. Procédé selon la revendication 3,
**caractérisé en ce que**
l'énoncé vocal est associé par le dispositif de reconnaissance vocale à une catégorie sur au moins deux catégories d'entrée, une première catégorie d'entrée étant définie comme une entrée de phrase lorsque le dispositif de reconnaissance vocale prend une partie de l'énoncé vocal pour une information supplémentaire, et une deuxième catégorie d'entrée comme une entrée de mot individuel lorsque le dispositif de reconnaissance vocale ne prend aucune partie de l'énoncé vocal pour une information supplémentaire.

5. Procédé selon la revendication 4,
**caractérisé en ce que**
lorsqu'aucune partie de l'énoncé vocal n'est prise pour une information supplémentaire entrée, on recherche tout l'énoncé vocal dans la deuxième base de données (2) et on sélectionne l'information supplémentaire mémorisée avec la plus grande probabilité de reconnaissance à partir de la deuxième base de données (2) comme un nom de destination entré.

6. Procédé selon la revendication 5,
**caractérisé en ce que**
dans le cas où une information supplémentaire n'est pas reconnue dans la deuxième base de données (2), l'utilisateur est sollicité pour fournir une entrée vocale d'une information supplémentaire dans le cadre d'un autre dialogue d'entrée.

7. Procédé selon l'une des revendications 3 à 6,
**caractérisé en ce que**
l'entrée de phase définie comporte au moins un nom de destination, et une information supplémentaire.

8. Procédé selon l'une des revendications 3 à 7,
**caractérisé en ce qu'**
un énoncé vocal entré est catégorié comme entrée de phrase lorsqu'une partie de l'énoncé vocal est reconnue comme une préposition ou comme une information supplémentaire devant lequel est placée une partie de l'énoncé vocal.
